# EUROPEAN PATENT SPECIFICATION

(11) **EP 0 518 408 B1**
(45) Date of publication and mention of the grant of the patent: **04.02.1998**
(21) Application number: 92201535.9
(22) Date of filing: 27.05.1992
(51) Int. Cl.: C08G 59/12, C08G 59/22, C08G 59/40, C07D 303/16, C08L 63/00

(54) **Thermosetting resin composition**
Wärmehärtbare Harzzusammensetzung
Composition de résine thermodurcissable

(30) Priority: 31.05.1991 GB 9111726
(43) Date of publication of application: 16.12.1992
(73) Proprietor: SHELL INTERNATIONALE RESEARCH MAATSCHAPPIJ B.V., 2596 HR Den Haag (NL)
(72) Inventor: Kooijmans, Petrus Gerardus, NL-1031 CM Amsterdam (NL); Smaardijk, Abraham Adriaan, NL-1031 CM Amsterdam (NL); Verburg, Antoon, NL-1031 CM Amsterdam (NL)

(56) References cited:
- EP-A- 0 366 205
- FR-A- 2 096 281
- NL-A- 286 209
- US-A- 3 629 295

## Description

The invention relates to a thermosetting resin composition and to the use thereof, particularly in coatings.

Diglycidyl esters of alpha,alpha'-dibranched dicarboxylic acids having both alpha carbon atoms with respect to the carbonyl groups substituted with alkyl, halogen or aryl groups have been described for use in thermosetting resin compositions in US patent No. 3,629,295. These diglycidyl esters were found to have improved hydrolytic stability and resistance to transesterification, presumably due to the presence of the sterically hindered ester linkages. According to said US patent curing of the diglycidyl esters can be performed using any type of polyfunctional curing agent which is capable of adding to an epoxy compound such as primary or secondary amines and carboxylic acid anhydrides.

European patent application publication No. 366205 also relates to diglycidyl esters of alpha,alpha'-dibranched dicarboxylic acids. It shows inter alia some favourable properties of castings (good hardness and clear coloured) and of a film (good adhesion to metal and high initial gloss) that were prepared from the diglycidyl ester of thiodipivalic acid using isophoronediamine (IPD) or diphenyldiaminomethane (DDM) as curing agent. However, in spite of the above mentioned advantageous properties inherent to the use of diglycidyl esters of alpha,alpha'-dibranched dicarboxylic acids in the cured resin systems, these systems were found to suffer from a major deficiency i.e. insufficient weathering resistance, which in fact precludes their use in automotive topcoats and in other end uses requiring a high degree of outdoor durability.

Therefore it is an object of the present invention to find thermosetting resin compositions based on diglycidyl esters of alpha,alpha'-dibranched dicarboxylic acids which not only show hydrolytic stability and resistance to transesterification but also show improved weathering resistance.

The invention therefore relates to a thermosetting resin composition comprising
i) an advanced resin product obtainable by reacting
   a) a diglycidyl ester of an alpha,alpha'-dibranched dicarboxylic acid of the general formula I 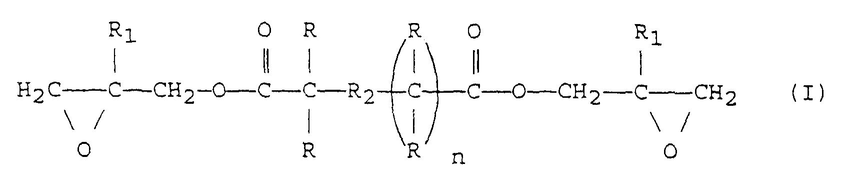 with
   b) an alpha,alpha'-dibranched dicarboxylic acid of the general formula II

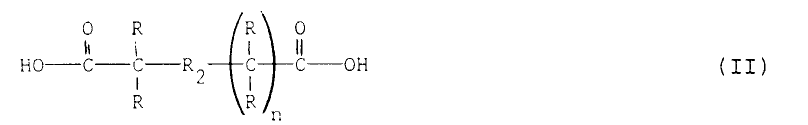

   wherein n is 0 or 1,
   wherein R is independently selected from the group consisting of straight and branched chain alkyl, cycloalkyl, arylalkyl and aryl, or both R's may form part of a substituted or unsubstituted cycloaliphatic ring system comprising 5, 6 or 8 carbon atoms, in which case n should be 0,
   wherein R₁ is independently a hydrogen atom or a methyl group,
   wherein R₂ is a single bond, substituted or unsubstituted alkylene or arylene or a radical of the formula III

      ―(R₃)_{m₁}―X―(R₃)_{m₂}― (III)
   wherein m₁ and m₂ are independently 0 or 1,
   wherein R₃ is independently selected from the group consisting of substituted or unsubstituted alkylene, and X is a single bond or one of the following bridging groups I to V 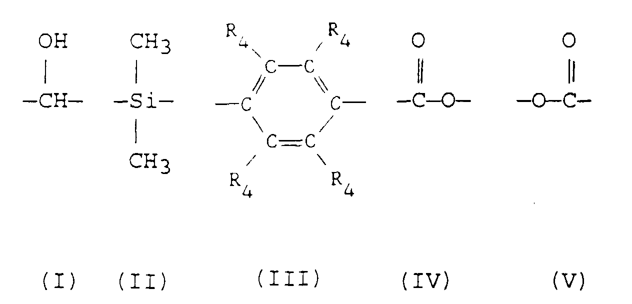
   wherein R₄ is independently selected from the group consisting of C₁ to C₄ alkyl,
   with the proviso that when X is bridging group (IV), m₁ is 0 and when X is bridging group (V), m₂ = 0 and when n is 0, R₂ is a single bond, the advanced resin having a number average molecular weight in the range of from 600 to 7000 ; and
ii) a curing compound selected from the group consisting of amino resins, blocked or unblocked (cyclo)aliphatic isocyanates, alpha,alpha'-dibranched cyclic anhydrides, acid-functional polyesters containing only alpha,-dibranched acid and ester groups, (cyclo)aliphatic amines, (cyclo)aliphatic polyamino amides, blocked or unblocked Lewis acids, and tertiary amines.

It was surprisingly found that the combination of i) an advanced resin product of a diglycidyl ester of an alpha,alpha'-dibranched dicarboxylic acid with an alpha,alpha'-dibranched dicarboxylic acid and ii) a curing agent which cures via the hydroxyl and/or epoxy groups of the advanced resin product and which does not form any "weak" ester linkages (which are formed when curing with conventional anhydrides or polycarboxylic acids), has a significant positive effect on the weathering resistance of the resulting cured matrix.

Advancing of a) with b) is generally carried out at a temperature of between 60 °C and 160 °C and the molar ratio of a) and b) applied preferably lies within the range of from 0.5 to 2.0.

It is preferred to react a) and b) in the absence of a solvent, however, if necessary a non-interfering solvent may be added to the reaction mixture, such as ketones, alcohols, ethers and aromatic hydrocarbons such as toluene and xylene.

In general no catalyst is needed in advancing a) with b). However, if required any suitable catalyst may be added to the reaction mixture, for example tertiary phosphines and amines, quaternary phosphonium and ammonium salts and metal salts such as chromium salts.

The branched dicarboxylic acid b) may be the same or different branched dicarboxylic acid wherefrom compound a) is derived.

If desired mixtures of a) and/or b) can be used.

Depending on the ratio of components a) and b) applied in the advancing process the advanced resin product will generally be a mixture of essentially linear compounds carrying carboxy- or epoxy end groups. The number average molecular weight of the advanced product formed by reacting a) with b) generally lies within the range of from 600 to 7000; this of course depends on the sort of starting compounds a) and b) and their molar ratio in the reaction mixture. The advanced resin product may vary from oil type liquid to highly viscous or solid products.

Terminal epoxy - or carboxy groups of the advanced resin product may be converted into secondary hydroxyl groups. This can be achieved during the reaction of a) with b) or after completion of the reaction of a) with b). To that end the epoxy end groups can be reacted with a stoichiometric quantity of an alpha-branched monocarboxylic acid such as dimethylolpropionic acid, hydroxypivalic acid or one of the commercially available tertiary monocarboxylic acids containing of from 5 to 10 carbon atoms known as VERSATIC acids (VERSATIC is a trade mark), likewise carboxy end groups can be reacted with a stoichiometric quantity of a monoglycidyl ester of an alpha-branched monocarboxylic acid such as for example one of the commercially available glycidyl esters of the VERSATIC acids, known as CARDURA (CARDURA is a trade mark).

Compounds a) can be prepared by methods known in the art e.g. as described in US patent No. 3,644,431.

As preferred compounds a) and b) can be mentioned those wherein R is C₁ to C₄ alkyl, R₁ is hydrogen, R₃ is C₁ to C₄ alkyl. R₄ is methyl and X is a single bond or a sulpho group.

Typical compounds a) are the diglycidyl esters of dimethylmalonic acid, diethylmalonic acid (DEMA), dibenzylmalonic acid, tetrapropyladipic acid (TPAA), tetramethylenecyclohexyladipic acid, 1,1-dicarboxy-2-phenyl-4-methyl cyclohexane, 1,1-dicarboxy-2-ethyl-4-methyl cyclohexane, 2,2,6,6-tetramethyl-3-keto-4-oxapimelic acid and 1,4-dicarboxy-1,4-dimethyl cyclohexane.

Preferred compounds a) are the diglycidyl esters of DEMA TMAA and TPAA.

Similarly, typical and preferred compounds b) are the dicarboxylic acids mentioned above in connection wiht the typical compounds a).

The advanced epoxy resin product can be used alone or in combination with other curable epoxy resin compounds in the thermosetting resin composition of the invention.

The thermosetting resin composition of the invention comprises a curing compound which cures via the hydroxyl and/or epoxy groups of the advanced product, in such a way that ether, amine, urethane or alpha,-dibranched ester linkages are formed but unbranched ester linkages are avoided. Typical curing agents are melamine-formaldehyde resins, urea-formaldehyde resins, glycoluryl resins, alcohol-blocked isophorone diisocyanates, 3,3,4,4-tetramethylsuccinic anhydride, isophorondiamine. Versamid 100 (an aminoamide), dicyandiamide, borontrifluoride-ethylamine complex, and N,N,N',N'-tetramethyl-1,6-diaminohexane. A particularly preferred curing compound is hexamethoxymethylmelamine (HMMM).

Depending on the choice of curing compound the cure can be effected in one or more cycles at temperatures of from 80 °C to 200 °C, preferably of from 140 to 170 °C for a period of from 5 to 30 minutes.

Although cross linking mainly takes place between the OH groups and the curing compound, the epoxy or carboxy end groups present in the advanced resin product may also participate in the cross-linking. It is furthermore possible to use accelerators in the curing reaction, suitable accelerators for amino type curing agents are e.g. acids such as phosphoric acid, para-toluene sulphonic acid (pTsa), Lewis acids and blocked Lewis acids such as BF₃-amine adducts; suitable accelerators for isocyanate type curing agents are e.g. tertiary amines, phosphines and metal salts such as dibutyl tindilaurate.

The thermosetting resin composition of the invention may further at any stage before cure be mixed with usual modifiers such as extenders, fillers pigments, dyestuffs, organic solvents, flow control agents and agents for conferring thixotropy.

Suitable organic solvents useful for modifying the curable thermosetting composition of the invention are e.g. toluene, xylene, n-propanol, butylacetate, acetone, methyl-ethyl ketone, diacetone-alcohol, ethylene glycol monomethyl ether and ethylene glycol monobutyl ether.

The thermosetting resin compositions of the invention can be used in solvent or water borne paints as well as in powder coating systems, which can be cured into insoluble and infusible weathering resistant coatings.

Due to the α,-dibranched ester structures the resin compositions of the invention are especially suitable for the production of water borne paints of high hydrolytic stability.

Typical enduses of the composition of the invention are seen in decorative paint systems e.g. for automotive topcoats.

The following examples are presented to illustrate certain specific embodiments of the present invention but are not to be considered limitative thereto.

### EXAMPLES

Advanced resins 1 to 6 according to the invention and 7 to 8 for comparison were prepared as follows:
1. Resin based on DGEDEMA and DEMA
   General structure: DGEDEMA-[DEMA-DGEDEMA]₃
   Composition:
   a) 4 moles diglycidylester (DGE) of diethylmalonic acid (DEMA)
   b) 3 moles DEMA
   Preparation:
   a+b are reacted at 120 °C for 2.5 hours. Final epoxy group content is 1.25 meq/g and final acid value is < 0.05 meq/g.
2. Resin based on DGETMAA and DEMA
   General structure: DGETMAA-[DEMA-DGETMAA]₃
   Composition:
   a) 4 moles DGE of 2,2,5,5-tetramethyladipic acid (TMAA)
   b) 3 moles DEMA
   Preparation:
   a+b are reacted at 120 °C for 2.5 hours. Final epoxy group content is 1.15 meq/g and final acid value is < 0.05 meq/g.
3. Resin based on DGESDPA and DEMA
   General structure: DGESDPA-[DEMA-DGESDPA]₃
   Composition:
   a) 4 moles DGE of sulfodipivalic acid (SDPA)
   b) 3 moles DEMA
   Preparation:
   a+b are reacted at 120 °C for 1.0 hours. Final epoxy group content is 0.91 meq/g and final acid value is < 0.05 meq/g.
4. Resin based on DGETMAA and TMAA
   General structure: DGETMAA-[TMAA-DGETMAA]₃
   Composition:
   a) 4 moles DGETMAA
   b) 3 moles TMAA
   Preparation:
   a+b are reacted at 140 °C for 1.0 hours. Final epoxy group content is 1.01 meq/g and final acid value is < 0.05 meq/g.
5. Resin based on DGEDEMA and DEMA
   General structure: DEMA-[DGEDEMA-DEMA]₃
   Composition:
   a) 3 moles DGEDEMA
   b) 4 moles DEMA
   Preparation:
   a+b are reacted at 120 °C for 1.0 hours. Final epoxy group content is < 0.05 meq/g and final acid value is 1.60 meq/g.
6. Resin based on DGEDEMA, DEMA, and V5
   General structure: V5-DGEDEMA-[DEMA-DGEDEMA]₃-V5
   Composition:
   a) 4 moles DGEDEMA
   b) 3 moles DEMA
   c) 2 moles pivalic acid (V5)
   d) catalyst AMC-2 (AMC-2 is a trade mark, available from CORDOVA Chemicals) (0.25% on solid resin)
   Preparation:
   a+b+c+d are reacted at 120 °C for 2.5 hours. Final epoxy group content is < 0.05 meq/g and final acid value is < 0.05 meq/g.
7. Resin based on DGEDEMA and AA
   General structure: DGEDEMA-[AA-DGEDEMA]₃
   Composition:
   a) 4 moles DGEDEMA
   b) 3 moles adipic acid (AA)
   c) catalyst AMC-2 (0.25% on solid resin)
   Preparation:
   a+b are reacted at 120 °C for 1.0 hours. Final epoxy group content is 1.26 meq/g and final acid value is < 0.05 meq/g.
8. Resin based on DGEDEMA and PA
   General structure: DGEDEMA-[PA-DGEDEMA]₃
   Composition:
   a) 4 moles DGEDEMA
   b) 3 moles phthalic acid (PA)
   c) catalyst AMC-2 (0.25% on solid resin)
Preparation:

a+b are reacted at 140 °C for 0.45 hours. Final epoxy group content is 1.26 meq/g and final acid value is < 0.05 meq/g.

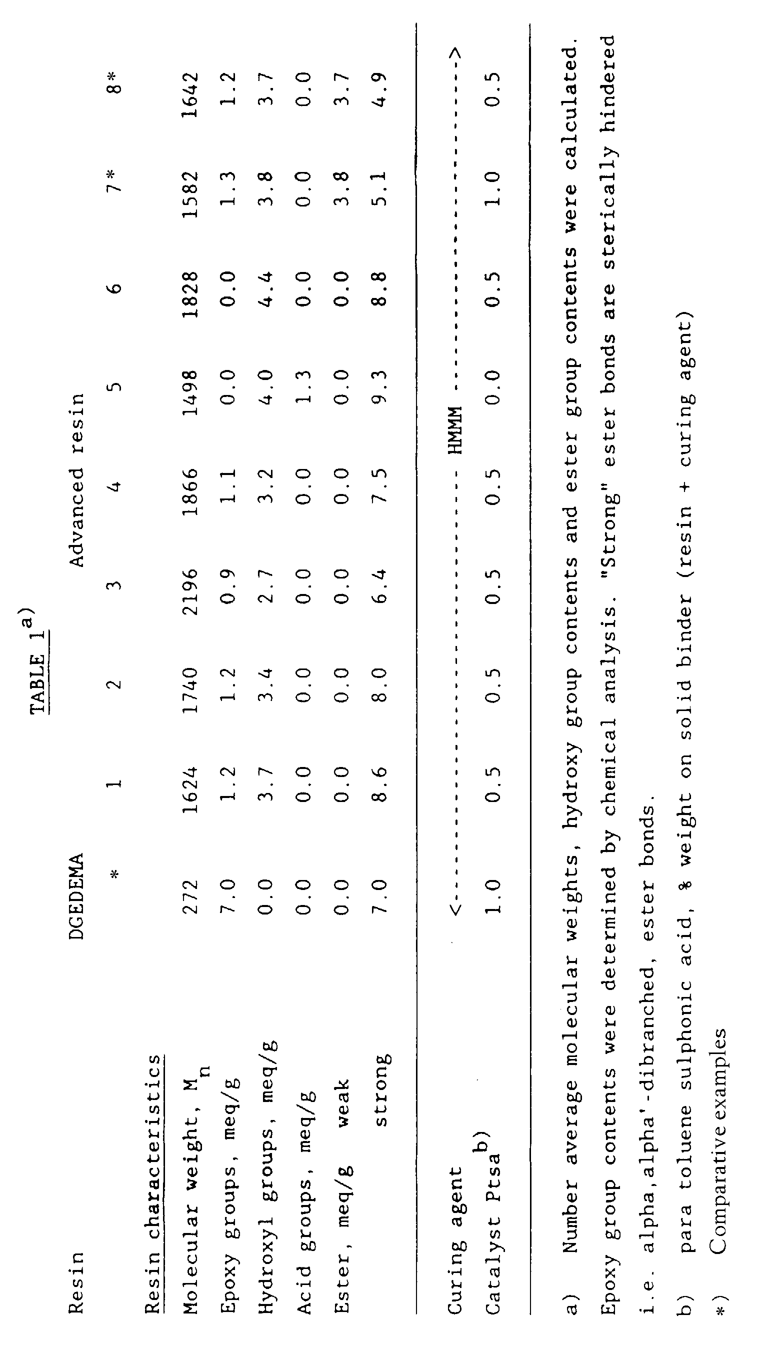

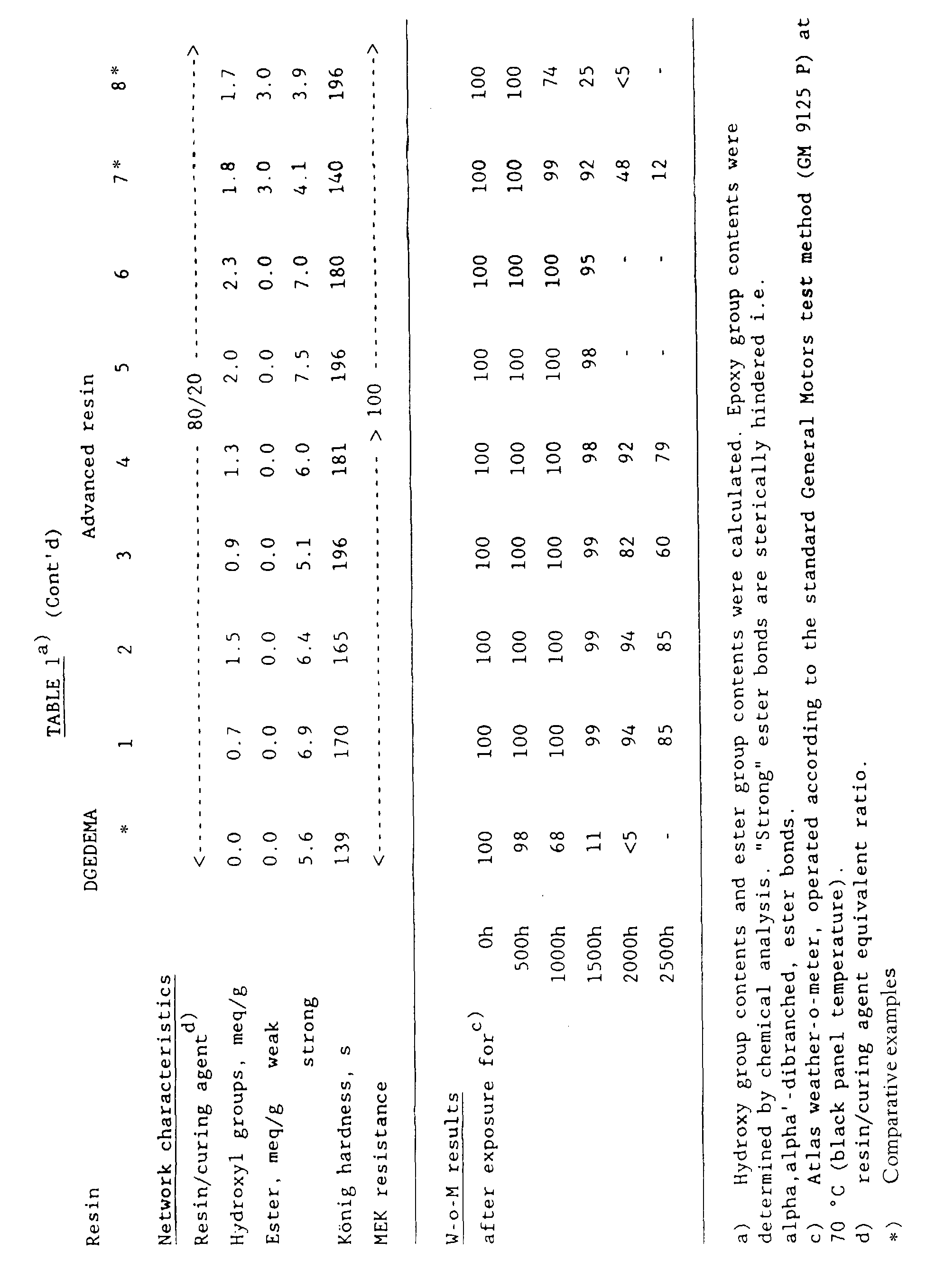

Coating compositions comprising DGEDEMA or one of the advanced resins 1 to 8, HMMM: hexamethoxymethyl melamine (Cymel 301; ex. American Cyanamid Inc.) as curing agent and p-toluenesulphonic acid as catalyst were prepared and applied on bare steel panels type QD-36, size 76x152x5 mm (precoated with a 10 µm thick epoxy primer). The cure schedule employed was 10 min for flash off followed by 10 min at 100 °C and 20 min at 160 °C. The thickness of the top coatings varied from 40 to 50 microns. Properties of the coating compositions are shown in table I.

Table I shows the excellent weathering resistance of the coatings comprising the thermosetting resin composition of the invention, (Nos. 1-6) in comparison to the performance of comparative systems 7 and 8 that were based on acids not containing alpha,-dibranching.

## Claims (Claims for the following Contracting State(s): BE, DE, FR, GB, IT, NL, SE)

1. A thermosetting resin composition comprising
i) an advanced resin product obtainable by reacting
a) a diglycidyl ester of an alpha,alpha'-dibranched dicarboxylic acid of the general formula I 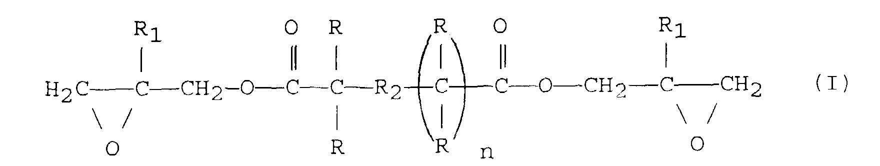 with
b) an alpha,alpha'-dibranched dicarboxylic acid of the general formula II 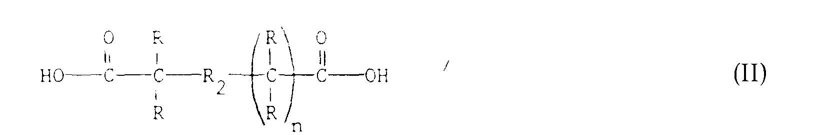
wherein n is 0 or 1,
wherein R is independently selected from the group consisting of straight and branched chain alkyl, cycloalkyl, arylalkyl and aryl, or both R's may form part of a substituted or unsubstituted cycloaliphatic ring system comprising 5, 6 or 8 carbon atoms, in which case n should be 0,
wherein R₁ is independently a hydrogen atom or a methyl group,
wherein R₂ is a single bond, substituted or unsubstituted alkylene or arylene or a radical of the formula III
wherein m₁ and m₂ are independently 0 or 1,
―(R₃)_{m₁}―X―(R₃)_{m₂}― (III)
wherein R₃ is independently selected from the group consisting of substituted or unsubstituted alkylene, and X is a single bond or one of the following bridging groups I to V 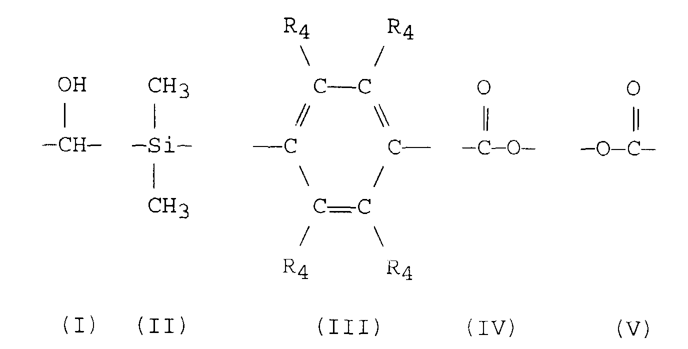
wherein R₄ is independently selected from the group consisting of C₁ to C₄ alkyl,
with the proviso that when X is bridging group (IV), m₁ is 0 and when X is bridging group (V), m₂ = 0 and when n is 0, R₂ is a single bond, the advanced resin having a number average molecular weight in the range of from 600 to 7000; and
ii) a curing compound selected from the group consisting of amino resins blocked or unblocked (cyclo)aliphatic isocyanates, alpha,alpha'-dibranched cyclic anhydrides, acid-functional polyesters containing only alpla,alpha'-dibranched acid and ester groups, (cyclo)aliphatic amines, (cyclo)aliphatic polyamino amides, blocked or unblocked Lewis acids, and tertiary amines.

2. A thermosetting resin composition as claimed in claim 1 wherein the molar ratio of compounds a) and b) lies in the range of from 0.5 to 2.0.

3. A thermosetting resin composition as claimed in claim 1 or 2 wherein compound a) is the diglycidyl ester of compound b).

4. A thermosetting resin composition as claimed in any one of the claims 1 to 3 wherein compound b) is reacted with a molar excess of a) in the presence of a stoichiometric quantity of an alpha branched monocarboxylic acid.

5. A thermosetting resin composition as claimed in any one of the claims 1 to 3 wherein compound a) is reacted with a molar excess of b) in the presence of a stoichiometric quantity of a glycidylester of an alpha-branched monocarboxylic acid.

6. A thermosetting resin composition as claimed in any one of claims 4 and 5 wherein the alpha-branched monocarboxylic acid is pivalic acid.

7. A thermosetting resin composition as claimed in any one of the claims 1 to 6 wherein compound a) is selected from the group consisting of the diglycidyl ester of diethylmalonic acid, 2,2,5,5-tetramethyladipic acid and tetrapropyladipic acid.

8. A thermosetting resin composition as claimed in any one of the claims 1 to 7 wherein compound b) is selected from the group consisting of diethylmalonic acid, 2,2,5,5-tetramethyladipic acid, and tetrapropyladipic acid.

9. A thermosetting resin composition as claimed in any one of the claims 1 to 8 wherein the curing compound is selected from the group consisting of melamine-formaldehyde resins, urea-formaldehyde resins, glycoluril resins, and alcohol blocked isophorone diisocyanates.

10. A thermosetting resin composition as claimed in claim 9 wherein the curing compound is hexamethoxymethylmelamine.

## Claims (Claims for the following Contracting State(s): ES)

1. Process for the preparation of a thermosetting resin composition, comprising
i) reacting
a) a diglycidyl ester of an alpha,alpha'-dibranched dicarboxylic acid of the general formula I 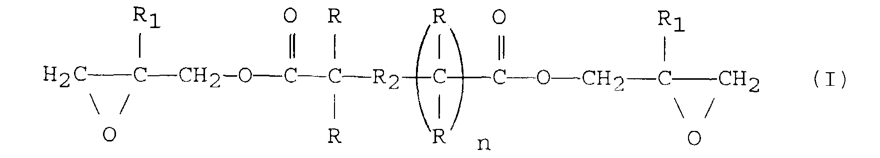 with
b) an alpha,alpha'-dibranched dicarboxylic acid of the general formula II 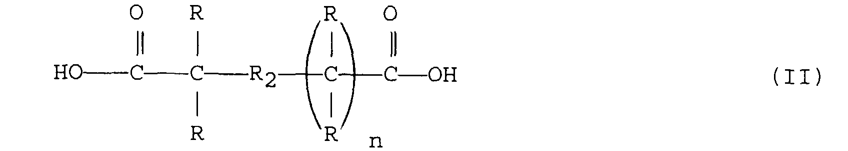
wherein n is 0 or 1,
wherein R is independently selected from the group consisting of straight and branched chain alkyl, cycloalkyl, arylalkyl and aryl, or both R's may form part of a substituted or unsubstituted cycloaliphatic ring system comprising 5, 6 or 8 carbon atoms, in which case n should be 0,
wherein R₁ is independently a hydrogen atom or a methyl group,
wherein R₂ is a single bond, substituted or unsubstituted alkylene or arylene or a radical of the formula III 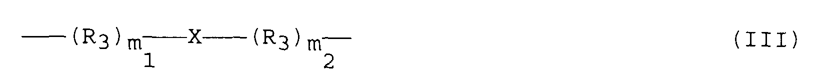
wherein m₁ and m₂ are independently 0 or 1,
wherein R₃ is independently selected from the group consisting of substituted or unsubstituted alkylene, and X is a single bond or one of the following bridging groups I to V 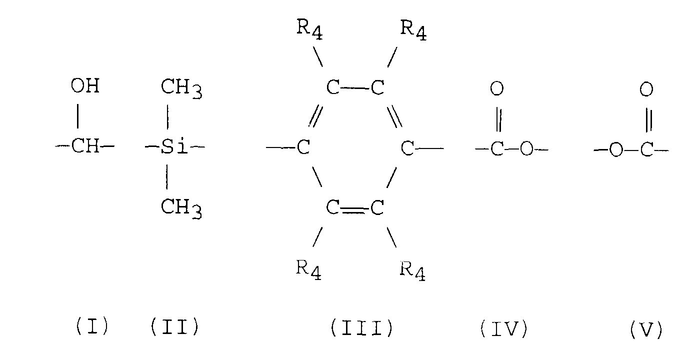
wherein R₄ is independently selected from the group consisting of C₁ to C₄ alkyl,
with the proviso that when X is bridging group (IV), m₁ is 0 and when X is bridging group (V), m₂ = 0 and when n is 0, R₂ is a single bond; and reacting the obtained advanced resin having a number average molecular weight in the range of from 600 to 7000, with
ii) a curing compound selected from the group consisting of amino resins blocked or unblocked (cyclo)aliphatic isocyanates, alpha,alpha'-dibranched cyclic anhydrides, acid-functional polyesters containing only alpha,alpha'-dibranched acid and ester groups, (cyclo)aliphatic amines, (cyclo)aliphatic polyamino amides, blocked or unblocked Lewis acids, and tertiary amines.

2. A process as claimed in claim 1 wherein the molar ratio of compounds a) and b) lies in the range of from 0.5 to 2.0.

3. A process as claimed in claim 1 or 2 wherein compound a) is the diglycidyl ester of compound b).

4. A process as claimed in any one of the claims 1 to 3 wherein compound b) is reacted with a molar excess of a) in the presence of a stoichiometric quantity of an alpha branched monocarboxylic acid.

5. A process as claimed in any one of the claims 1 to 3 wherein compound a) is reacted with a molar excess of b) in the presence of a stoichiometric quantity of a glycidylester of an alpha-branched monocarboxylic acid.

6. A process as claimed in any one of claims 4 and 5 wherein the alpha-branched monocarboxylic acid is pivalic acid.

7. A process as claimed in any one of the claims 1 to 6 wherein compound a) is selected from the group consisting of the diglycidyl ester of diethylmalonic acid, 2,2,5,5-tetramethyladipic acid and tetrapropyladipic acid.

8. A process as claimed in any one of the claims 1 to 7 wherein compound b) is selected from the group consisting of diethylmalonic acid, 2,2,5,5-tetramethyladipic acid, and tetrapropyladipic acid.

9. A process as claimed in any one of the claims 1 to 8 wherein the curing compound is selected from the group consisting of melamine-formaldehyde resins, urea-formaldehyde resins, glycoluril resins, and alcohol blocked isophorone diisocyanates.

10. A process as claimed in claim 9 wherein the curing compound is hexamethoxymethylmelamine.

## Patentansprüche (Patentansprüche für folgende(n) Vertragsstaat(en): BE, DE, FR, GB, IT, NL, SE)

1. Wärmehärtbare Harzzusammensetzung, umfassend
i) ein vorreagiertes Harzprodukt, erhältlich durch Umsetzen von
a) einem Diglycidylester einer alpha,alpha'-doppeltverzweigten Dicarbonsäure der allgemeinen Formel I 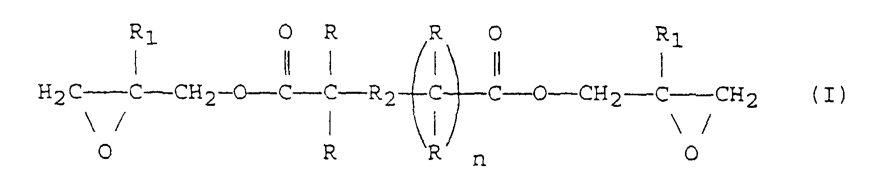 mit
b) einer alpha,alpha'-doppeltverzweigten Dicarbonsäure der allgemeinen Formel II 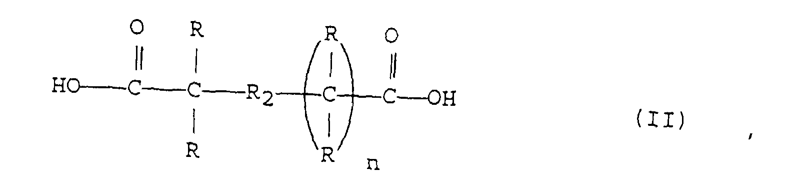
worin n den Wert 0 oder 1 hat,
worin R unabhängig ausgewählt ist aus der aus geradem und verzweigtkettigem Alkyl, Cycloalkyl, Arylalkyl und Aryl bestehenden Gruppe oder beide Reste R Teil eines substituierten oder unsubstituierten cycloaliphatischen Ringsystems mit 5, 6 oder 8 Kohlenstoffatomen bilden können, in welchem Falle n den Wert 0 haben sollte,
worin R₁ unabhängig ein Wasserstoffatom oder eine Methylgruppe darstellt,
worin R₂ eine einfache Bindung, substituiertes oder unsubstituiertes Alkylen oder Arylen oder einen Rest mit der Formel III 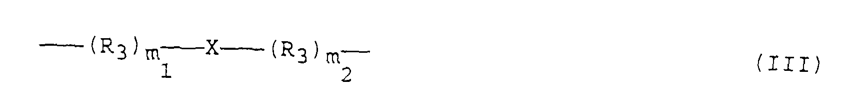 bezeichnet, worin m₁ und m₂ unabhängig voneinander 0 oder 1 darstellen,
worin R₃ unabhängig aus der aus substituiertem oder unsubstituiertem Alkylen bestehenden Gruppe ausgewählt ist und worin X eine Einfachbindung oder eine der folgenden Brückengruppen I bis V bedeutet 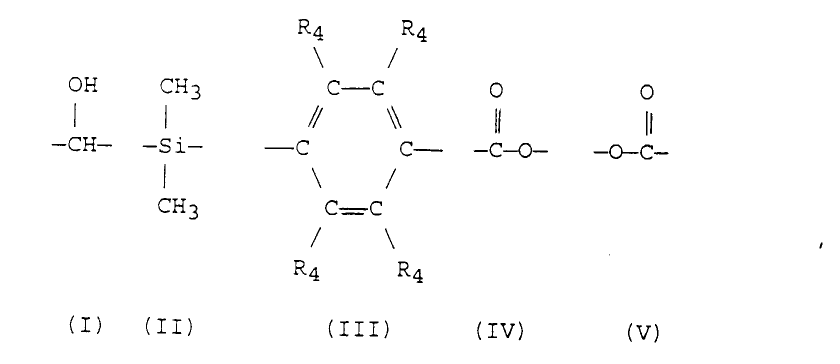
worin R₄ unabhängig aus der aus C₁ bis C₄-Alkyl bestehenden Gruppe ausgewählt ist,
mit der Maßgabe, daß dann, wenn X die Brückengruppe (IV) bezeichnet, m₁ den Wert 0 hat, und wenn X die Brückengruppe (V) darstellt, m₂ den Wert 0 hat, und wenn n den Wert 0 hat, R₂ eine Einfachbindung ist, wobei das vorreagierte Harz ein zahlenmittleres Molekulargewicht im Bereich von 600 bis 7000 aufweist; und
ii) einem Härter, ausgewählt aus der Gruppe, die aus Aminoharzen, blockierten oder unblockierten (cyclo)aliphatischen Isocyanaten, alpha,alpha'-doppeltverzweigten cyclischen Anhydriden, säurefunktionellen Polyestern, die nur alpha,alpha'-doppeltverzweigte Säure- und Estergruppen enthalten, (cyclo)aliphatischen Aminen, (cyclo)aliphatischen Polyaminoamiden, blockierten oder unblockierten Lewis-Säuren und tertiären Aminen besteht.

2. Wärmehärtbare Harzzusammensetzung nach Anspruch 1, worin das Molverhältnis der Verbindungen a) und b) im Bereich von 0,5 bis 2,0 liegt.

3. Wärmehärtbare Harzzusammensetzung nach Anspruch 1 oder 2, worin die Verbindung a) der Diglycidylester von Verbindung b) ist.

4. Wärmehärtbare Harzzusammensetzung nach einem der Ansprüche 1 bis 3, worin die Verbindung b) mit einem molaren Überschuß von a) in Anwesenheit einer stöchiometrischen Menge einer alpha-verzweigten Monocarbonsäure umgesetzt wird.

5. Wärmehärtbare Harzzusammensetzung nach einem der Ansprüche 1 bis 3, worin die Verbindung a) mit einem molaren Überschuß an b) in Anwesenheit einer stöchiometrischen Menge eines Glycidylesters einer alpha-verzweigten Monocarbonsäure umgesetzt wird.

6. Wärmehärtbare Harzzusammensetzung nach einem der Ansprüche 4 und 5, worin die alpha-verzweigte Monocarbonsäure Pivalinsäure ist.

7. Wärmehärtbare Harzzusammensetzung nach einem der Ansprüche 1 bis 6, worin die Verbindung a) aus der aus dem Diglycidylester der Diethylmalonsäure, 2,2,5,5-Tetramethyladipinsäure und Tetrapropyladipinsäure bestehenden Gruppe ausgewählt ist.

8. Wärmehärtbare Harzzusammensetzung nach einem der Ansprüche 1 bis 7, worin die Verbindung b) aus der aus Diethylmalonsäure, 2,2,5,5-Tetramethyladipinsäure und Tetrapropyladipinsäure bestehenden Gruppe ausgewählt ist.

9. Wärmehärtbare Harzzusammensetzung nach einem der Ansprüche 1 bis 8, worin die Härtungsverbindung aus der aus Melaminformaldehydharzen, Harnstofformaldehydharzen, Glycolurilharzen und alkoholblockierten Isophorondiisocyanaten bestehenden Gruppe ausgewählt ist.

10. Wärmehärtbare Harzzusammensetzung nach Anspruch 9, worin die Härtungsverbindung Hexamethoxymethylmelamin ist.

## Patentansprüche (Patentansprüche für folgende(n) Vertragsstaat(en): ES)

1. Verfahren zur Herstellung einer wärmehärtbaren Harzzusammensetzung, umfassend
i) ein Umsetzen von
a) einem Diglycidylester einer alpha,alpha'-doppeltverzweigten Dicarbonsäure der allgemeinen Formel I 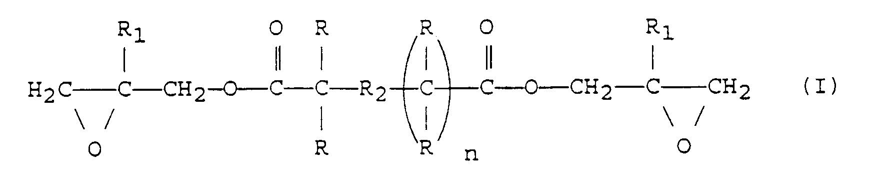 mit
b) einer alpha,alpha'-doppeltverzweigten Dicarbonsäure der allgemeinen Formel II 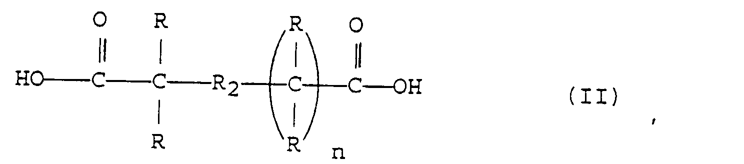
worin n den Wert 0 oder 1 hat,
worin R unabhängig ausgewählt ist aus der aus geradem und verzweigtkettigem Alkyl, Cycloalkyl, Arylalkyl und Aryl bestehenden Gruppe oder beide Reste R Teil eines substituierten oder unsubstituierten cycloaliphatischen Ringsystems mit 5, 6 oder 8 Kohlenstoffatomen bilden können, in welchem Falle n den Wert 0 haben sollte,
worin R₁ unabhängig ein Wasserstoffatom oder eine Methylgruppe darstellt,
worin R₂ eine einfache Bindung, substituiertes oder unsubstituiertes Alkylen oder Arylen oder einen Rest mit der Formel III 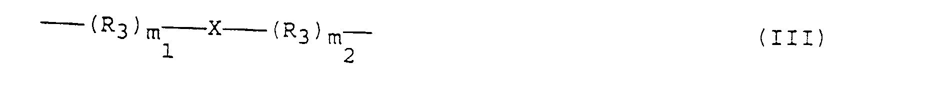 bezeichnet, worin m₁ und m₂ unabhängig voneinander 0 oder 1 darstellen,
worin R₃ unabhängig aus der aus substituiertem oder unsubstituiertem Alkylen bestehenden Gruppe ausgewählt ist und worin X eine Einfachbindung oder eine der folgenden Brückengruppen I bis V bedeutet 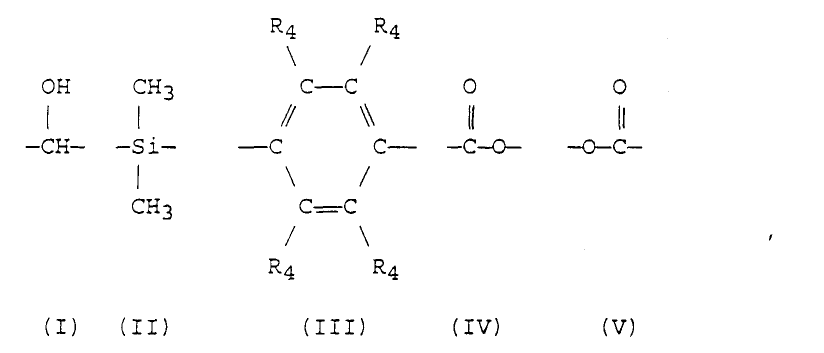
worin R₄ unabhängig aus der aus C₁ bis C₄-Alkyl bestehenden Gruppe ausgewählt ist,
mit der Maßgabe, daß dann, wenn X die Brückengruppe (IV) bezeichnet, m₁ den Wert 0 hat, und wenn X die Brückengruppe (V) darstellt, m₂ den Wert 0 hat, und wenn n den Wert 0 hat, R₂ eine Einfachbindung ist; und ein Umsetzen des erhaltenen vorreagierten Harzes mit einem zahlenmittleren Molekulargewicht im Bereich von 600 bis 7000 mit
ii) einem Härter, ausgewählt aus der Gruppe, die aus Aminoharzen, blockierten oder unblockierten (cyclo)aliphatischen Isocyanaten, alpha,alpha'-doppeltverzweigten cyclischen Anhydriden, säurefunktionellen Polyestern, die nur alpha, alpha'-doppeltverzweigte Säure- und Estergruppen enthalten, (cyclo)aliphatischen Aminen, (cyclo)aliphatischen Polyaminoamiden, blockierten oder unblockierten Lewis-Säuren und tertiären Aminen besteht.

2. Verfahren nach Anspruch 1, worin das Molverhältnis der Verbindungen a) und b) im Bereich von 0,5 bis 2,0 liegt.

3. Verfahren nach Anspruch 1 oder 2, worin die Verbindung a) der Diglycidylester von Verbindung b) ist.

4. Verfahren nach einem der Ansprüche 1 bis 3, worin die Verbindung b) mit einem molaren Überschuß von a) in Anwesenheit einer stöchiometrischen Menge einer alpha-verzweigten Monocarbonsäure umgesetzt wird.

5. Verfahren nach einem der Ansprüche 1 bis 3, worin die Verbindung a) mit einem molaren Überschuß an b) in Anwesenheit einer stöchiometrischen Menge eines Glycidylesters einer alpha-verzweigten Monocarbonsäure umgesetzt wird.

6. Wärmehärtbare Harzzusammensetzung nach einem der Ansprüche 4 und 5, worin die alpha-verzweigte Monocarbonsäure Pivalinsäure ist.

7. Verfahren nach einem der Ansprüche 1 bis 6, worin die Verbindung a) aus der aus dem Diglycidylester der Diethylmalonsäure, 2,2,5,5-Tetramethyladipinsäure und Tetrapropyladipinsäure bestehenden Gruppe ausgewählt ist.

8. Verfahren nach einem der Ansprüche 1 bis 7, worin die Verbindung b) aus der aus Diethylmalonsäure, 2,2,5,5-Tetramethyladipinsäure und Tetrapropyladipinsäure bestehenden Gruppe ausgewählt ist.

9. Verfahren nach einem der Ansprüche 1 bis 8, worin die Härtungsverbindung aus der aus Melaminformaldehydharzen, Harnstofformaldehydharzen, Glycolurilharzen und alkoholblockierten Isophorondiisocyanaten bestehenden Gruppe ausgewählt ist.

10. Verfahren nach Anspruch 9, worin die Härtungsverbindung Hexamethoxymethylmelamin ist.

## Revendications (Revendications pour l'(les) Etat(s) contractant(s) suivant(s): BE, DE, FR, GB, IT, NL, SE)

1. Composition de résine thermodurcissable, qui comprend :
i) un produit résineux de pointe, que l'on obtient par la réaction
a) d'un ester diglycidylique d'un acide dicarboxylique alpha,alpha'-diramifié de la formule générale I : 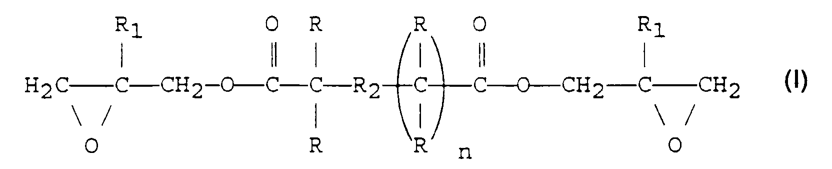 avec
b) un acide dicarboxylique alpha,alpha'-diramifié de la formule générale II : 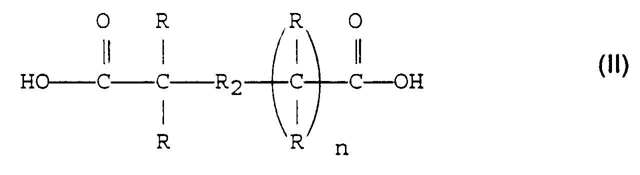
formules dans lesquelles n est égal 0 ou à 1,
formules dans lesquelles R est indépendamment choisi dans le groupe formé par les radicaux alkyle à chaîne droite et à chaîne ramifiée, cycloalkyle, arylalkyle et aryle, ou bien deux symboles R peuvent faire partie d'un système cyclique cycloaliphatique, substitué ou non substitué, comprenant 5, 6 ou 8 atomes de carbone, auquel cas n doit être égal à 0,
où R₁ représente indépendamment un atome d'hydrogène ou le radical méthyle,
où R₂ représente une simple liaison, un radical arylène ou alkylène, substitué ou non substitué, de la formule III : 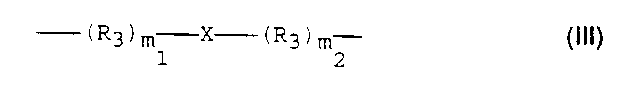
dans laquelle m₁ et m₂ sont indépendamment égaux à 0 ou à 1,
dans laquelle R₃ est indépendamment choisi dans le groupe formé par les radicaux alkylène, substitués ou non substitués, et X représente une simple liaison ou l'un des radicaux I à V de pontage suivants : 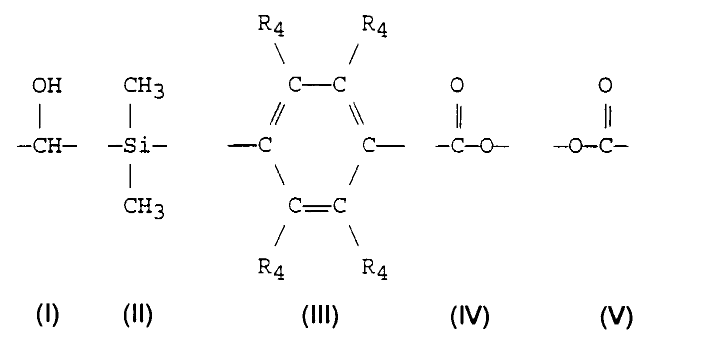
où R₄ est indépendamment choisi dans le groupe formé par les radicaux alkyle en C₁ à C₄,
avec la condition que lorsque X représente le groupe de pontage (IV), m₁ soit égal à 0 et que lorsque X représente le groupe de pontage (V), m₂ soit égal à 0 et que lorsque n est égal à 0, R₂ représente une simple liaison, la résine de pointe possédant un poids moléculaire en nombre qui fluctue de 600 à 7000; et
ii) un composé de durcissement choisi dans le groupe formé par les résines amino, les isocyanates (cyclo)aliphatiques, bloqués ou non bloqués, les anhydrides cycliques alpha,alpha'-diramifiés, les polyesters à fonctionnalité acide contenant des radicaux ester et acide uniquement alpha-diramifiés, les amines (cyclo)aliphatiques, les polyaminoamides (cyclo)aliphatiques, les acides de Lewis, bloqués ou non bloqués, et les amines tertiaires.

2. Composition de résine thermodurcissable suivant la revendication 1, caractérisée en ce que le rapport molaire des composés a) et b) se situe dans la plage de 0,5 à 2,0.

3. Composition de résine thermodurcissable suivant la revendication 1 ou 2, caractérisée en ce que le composé a) est l'ester diglycidylique du composé b).

4. Composition de résine thermodurcissable suivant l'une quelconque des revendications 1 à 3, caractérisée en ce que l'on fait réagir le composé b) avec un excès molaire de a) en présence d'une quantité stoechiométrique d'un acide monocarboxylique alpha-ramifié.

5. Composition de résine thermodurcissable suivant l'une quelconque des revendications 1 à 3, caractérisée en ce que l'on fait réagir le composé a) avec un excès molaire de b) en présence d'une quantité stoechiométrique d'un ester glycidylique d'un acide monocarboxylique alpha-ramifié.

6. Composition de résine thermodurcissable suivant l'une quelconque des revendications 4 et 5, caractérisée en ce que l'acide monocarboxylique alpha-ramifié est l'acide pivalique.

7. Composition de résine thermodurcissable suivant l'une quelconque des revendications 1 à 6, caractérisée en ce que l'on choisit le composé a) dans le groupe formé par l'ester diglycidylique de l'acide diéthylmalonique, de l'acide 2,2,5,5-tétraméthyladipique et de l'acide tétrapropyladipique.

8. Composition de résine thermodurcissable suivant l'une quelconque des revendications 1 à 7, caractérisée en ce que l'on choisit le composé b) dans le groupe formé par l'acide diéthylmalonique, l'acide 2,2,5,5-tétraméthyladipique et l'acide tétrapropyladipique.

9. Composition de résine thermodurcissable suivant l'une quelconque des revendications 1 à 8, caractérisée en ce que l'on choisit le composé de durcissement dans le groupe formé par les résines de mélamine-formaldéhyde, les résines d'urée-formaldéhyde, les résines de glycolurile et les diisocyanates d'isophorone bloqués à l'alcool.

10. Composition de résine thermodurcissable suivant la revendication 9, caractérisée en ce que le composé de durcissement est l'hexaméthoxyméthylmélamine.

## Revendications (Revendications pour l'(les) Etat(s) contractant(s) suivant(s): ES)

1. Procédé de préparation d'une composition de résine thermodurcissable, qui comprend :
i) la réaction
a) d'un ester diglycidylique d'un acide dicarboxylique alpha,alpha'-diramifié de la formule générale I : 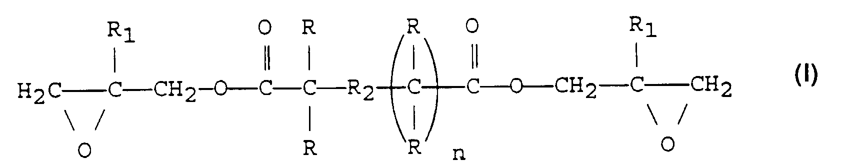 avec
b) un acide dicarboxylique alpha,alpha'-diramifié de la formule générale II : 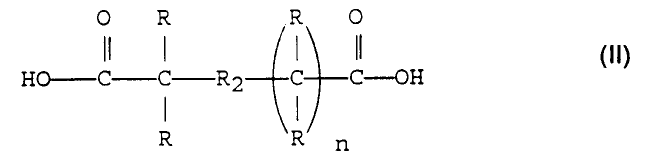
formules dans lesquelles n est égal 0 ou à 1,
formules dans lesquelles R est indépendamment choisi dans le groupe formé par les radicaux alkyle à chaîne droite et à chaîne ramifiée, cycloalkyle, arylalkyle et aryle, ou bien deux symboles R peuvent faire partie d'un système cyclique cycloaliphatique, substitué ou non substitué, comprenant 5, 6 ou 8 atomes de carbone, auquel cas n doit être égal à 0,
où R₁ représente indépendamment un atome d'hydrogène ou le radical méthyle,
où R₂ représente une simple liaison, un radical arylène ou alkylène, substitué ou non substitué, de la formule III : 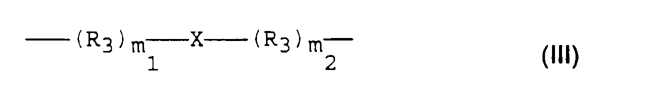
dans laquelle m₁ et m₂ sont indépendamment égaux à 0 ou à 1,
dans laquelle R₃ est indépendamment choisi dans le groupe formé par les radicaux alkylène, substitués ou non substitués, et X représente une simple liaison ou l'un des radicaux I à V de pontage suivants : 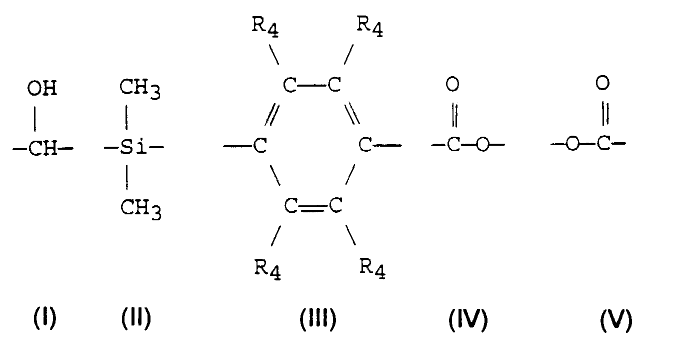
où R₄ est indépendamment choisi dans le groupe formé par les radicaux alkyle en C₁ à C₄,
avec la condition que lorsque X représente le groupe de pontage (IV), m₁ soit égal à 0 et que lorsque X représente le groupe de pontage M, m₂ soit égal à 0 et que lorsque n est égal à 0, R₂ représente une simple liaison; et la réaction de la résine de pointe possédant un poids moléculaire en nombre qui fluctue de 600 à 7000, avec
ii) un composé de durcissement choisi dans le groupe formé par les résines amino, les isocyanates (cyclo)aliphatiques, bloqués ou non bloqués, les anhydrides cycliques alpha,alpha'-diramifiés, les polyesters à fonctionnalité acide contenant des radicaux ester et acide uniquement alpha-diramifiés, les amines (cyclo)aliphatiques, les polyaminoamides (cyclo)aliphatiques, les acides de Lewis, bloqués ou non bloqués, et les amines tertiaires.

2. Procédé suivant la revendication 1, caractérisé en ce que le rapport molaire des composés a) et b) se situe dans la plage de 0,5 à 2,0.

3. Procédé suivant la revendication 1 ou 2, caractérisé en ce que le composé a) est l'ester diglycidylique du composé b).

4. Procédé suivant l'une quelconque des revendications 1 à 3, caractérisé en ce que l'on fait réagir le composé b) avec un excès molaire de a) en présence d'une quantité stoechiométrique d'un acide monocarboxylique alpha-ramifié.

5. Procédé suivant l'une quelconque des revendications 1 à 3, caractérisé en ce que l'on fait réagir le composé a) avec un excès molaire de b) en présence d'une quantité stoechiométrique d'un ester glycidylique d'un acide monocarboxylique alpha-ramifié.

6. Procédé suivant l'une quelconque des revendications 4 et 5, caractérisé en ce que l'acide monocarboxylique alpha-ramifié est l'acide pivalique.

7. Procédé suivant l'une quelconque des revendications 1 à 6, caractérisé en ce que l'on choisit le composé a) dans le groupe formé par l'ester diglycidylique de l'acide diéthylmalonique, de l'acide 2,2,5,5-tétraméthyladipique et de l'acide tétrapropyladipique.

8. Procédé suivant l'une quelconque des revendications 1 à 7, caractérisé en ce que l'on choisit le composé b) dans le groupe formé par l'acide diéthylmalonique, l'acide 2,2,5,5-tétraméthyladipique et l'acide tétrapropyladipique.

9. Procédé suivant l'une quelconque des revendications 1 à 8, caractérisé en ce que l'on choisit le composé de durcissement dans le groupe formé par les résines de mélamine-formaldéhyde, les résines d'urée-formaldéhyde, les résines de glycolurile et les diisocyanates d'isophorone bloqués à l'alcool.

10. Procédé suivant la revendication 9, caractérisé en ce que le composé de durcissement est l'hexaméthoxyméthylmélamine.
